# EUROPÄISCHE PATENTSCHRIFT

(11) **EP 0 899 438 B1**
(45) Veröffentlichungstag und Bekanntmachung des Hinweises auf die Patenterteilung: **29.05.2002**
(21) Anmeldenummer: 97810594.8
(22) Anmeldetag: 25.08.1997
(51) Int. Cl.: F02C 7/16, F02C 3/30, F01K 21/04

(54) **Gasturbine mit Wärmerückgewinnungserzeuger von überhitztem Dampf zum Einspritzen in die Brennkammer und von Sattdampf zum Kühlen und dann Einspritzen in die Brennkammer**
Gas turbine with heat recovery generator of superheated steam for injecting into the combustion chamber and of saturated steam of cooling then injecting into the combustion chamber
Turbine à gaz avec générateur à récupération de vapeur surchaufée pour injection dans la chambre de combustion et de vapeur saturante pour refroidissement puis injection dans la chambre de combustion

(43) Veröffentlichungstag der Anmeldung: 03.03.1999
(73) Patentinhaber: Alstom, 75116 Paris (FR)
(72) Erfinder: Frutschi, Hans Ulrich, 5223 Riniken (CH)
(74) Vertreter: Liebe, Rainer

(56) Entgegenhaltungen:
- EP-A- 0 731 255
- DE-A- 3 331 153
- FR-A- 343 772
- GB-A- 2 158 158

## Beschreibung

### Technisches Gebiet

Die Erfindung betrifft ein Verfahren zum Betrieb einer Kraftwerksanlage gemäss Oberbegriff des Anspruch 1

### Stand der Technik

Aus DE 44 09 567 A1 ist ein Verfahren zur Kühlung thermisch belasteter Komponenten einer Gasturbine bekanntgeworden, bei welchem eine bestimmte Sattdampfmenge aus einem der Gasturbogruppe nachgeschalteten Abhitzedampferzeuger entnommen wird. Vorzugsweise stammt diese Dampfmenge aus einer zum Dampfkreislauf gehörenden Trommel. Bei den mit Sattdampf zu kühlenden Komponenten handelt es sich vorzugsweise um die Brennkammer und Turbine, welche gekühlt werden. Nach erfolgter Kühlung der genannten Komponenten ist die Dampfmenge soweit überhitzt worden, so dass sie dann arbeitsleistend in eine Dampfturbine an passender Stelle eingeleitet werden kann.
Bei einer solchen Schaltung stellt man immer wieder fest, dass es aus Sicherheitsgründen vorteilhaft ist, Vorkehrungen vorzusehen, welche die Kühlwirkung der angezapften Dampfmenge nach oben oder nach unten zu korrigieren vermögen. Einerseits kann durch Wassereinspritzung an geeigneter Stelle, welche einer Ueberhitzung des Kühldampfes entgegenwirkt, andererseits durch Zuführung beispielsweise einer Rauchgasmenge, welche korrigierend gegen eine zu schwache Kühlwirkung einwirkt, eingegriffen werden.
Solche Beistellungen sind immer mit einem zusätzlichen schaltungstechnischen Aufwand verbunden, wobei eine Maximierung des Wirkungsgrads seine diesbezüglichen Grenzen aufweist.
EP 0 731 255 A1 offenbart ein Verfahren zum Betrieb einer Kraftwerksanlage, bestehend aus einer Gasturbogruppe und einem nachgeschalteten von deren Abgasen durchströmten Abhitzedampferzeuger, bei dem ein Teil des in dem Abhitzedampferzeuger produzierten überhitzten Dampfes an geeigneter Stelle in die Gasturbogruppe eingeblasen wird, und der andere Teil des in dem Abhitzedampferzeuger anfallenden Sattdampfes über einen von Verdichterluft durchströmten Wärmeübertrager geleitet, dort überhitzt und anschliessend ebenfalls in die Gasturbogruppe eingeleitet wird. Nach einer besonderen Ausführungsart kann ein Teil dieses Dampfes vor Beaufschlagung des Wärmeübertragers als Kühlmedium für die heissen Strukturen der Gasturbogruppe verwendet werden.
Dieser Lösungsvorschlag erlaubt keine individuelle Kühlung der unterschiedlich belasteten Strukturen der Gasturbogruppe und erfordert einen zusätzlichen Wärmeübertrager zur Überhitzung des in die Gasturbogruppe einzuleitenden Sattdampfes.

### Darstellung der Erfindung

Hier will die Erfindung Abhilfe schaffen. Der Erfindung, wie sie in den Ansprüchen gekennzeichnet ist, liegt die Aufgabe zugrunde bei einem Verfahren der eingangs genannten Art mit verringertem apparatetechnischen Aufwand den Wirkungsgrad und die Leistung der Anlage zu maximieren bei individueller Kühlung der unterschiedlich heissen Strukturen der Gasturbogruppe.

Dies wird erreicht, indem die ganze im Zusammenhang mit dem Betrieb der Gasturbogruppe erzeugte Dampfmenge vor der Befeuerung einer zur Gasturbogruppe gehörenden Hochdruck-Brennkammer eingebracht wird.

Dabei wird eine Sattdampfmenge aus einem der Gasturbogruppe nachgeschalteten Abhitzedampferzeuger entnommen und als Kühldampf für die zu kühlenden Strukturen dieser Gasturbogruppe verwendet. Die Kühlung wird hierbei anhand eines geschlossenen Kühlungspfads bewerkstelligt, d.h. sämtliche Dampfmenge wird nach durchströmtem Kühlungspfad in die Brennkammer eingebracht. Bei dieser Durchströmung wird der Sattdampf soweit erhitzt, dass er bei der Einleitung in die Hochdruck-Brennkammer die Qualität eines überhitzten Dampfes aufweist.
Das restliche in den Abhitzedampferzeuger eingespeiste Kondensat wird zu überhitztem Dampf aufbereitet und direkt in die Hochdruck-Brennkammer eingeleitet. Somit wird der Hochdruck-Brennkammer sämtlicher in dem Abhitzedampferzeuger produzierter Dampf zugeführt, wobei die Qualität annähernd gleichförmig ist, d.h.die Kühlung der thermisch beanspruchten Komponenten der Gasturbogruppe bewirken eine qualitative Erhöhung des anfänglich eingeleiteten Sattdampfes. Indem diese Teilmenge über die Kühlung thermisch aufbereitet wird, steht für die restliche in dem Abhitzedampferzeuger aufzubereitende Dampfmenge, die über ein Drosselorgan zugeführt wird, mehr Wärmepotential zur Verfügung, so dass schliesslich der Hochdruck-Brenkammer eine grössere qualitätiv hochstehende Dampfmenge zur Verfügung steht. Einerseits wird damit der Wirkungsgrad maximiert, andererseits nimmt die spezifische Leistung der Anlage durch eben diese grössere und bessere Dampfmenge zu.

Im folgenden wird anhand der Zeichnung ein Ausführungsbeispiel der Erfindung näher erläutert. Alle für das unmittelbare Verständnis der Erfindung nicht erforderlichen Elemente sind fortgelassen worden. Die Strömungsrichtung der verschiedenen Medien ist mit Pfeilen angegeben.

### Kurze Beschreibung der Zeichnung

Die einzige Figur zeigt eine Schaltung einer Gasturbogruppe in Wirkverbindung mit einem nachgeschalteten Abhitzedampferzeuger und dessen Infrastruktur.

### Wege zur Ausführung der Erfindung, gewerbliche Verwendbarkeit

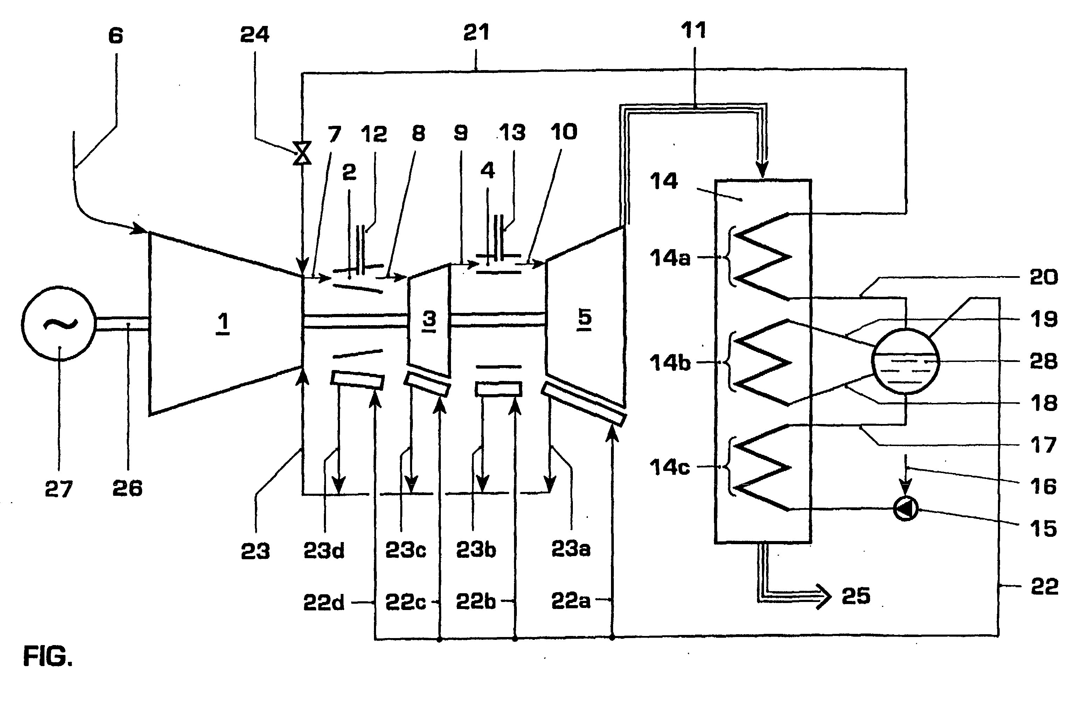

Fig. 1 zeigt eine Kraftwerksanlage, welche aus einer Gasturbogruppe, einem der Gasturbogruppe nachgeschalteten Abhitzedampferzeuger und einem mit diesem in Wirkverbindung stehenden Dampfkreislauf besteht.

Die vorliegende Gasturbogruppe ist auf einer sequentiellen Verbrennung aufgebaut. Die in der Figur nicht ersichtliche Bereitstellung des zum Betrieb der verschiedenen Brennkammem notwendigen Brennstoffes kann beispielsweise durch eine mit der Gasturbogruppe zusammenwirkende Kohlenvergasung bewerkstelligt werden. Selbstverständlich ist es auch möglich, den zum Einsatz gelangenden Brennstoff aus einem Brennstoff-Primämetz zu beziehen. Wird die Versorgung eines gasförmigen Brennstoffes zum Betrieb der Gasturbogruppe über eine Pipeline bereitgestellt, so kann das Potential aus der Druck- und/oder Temperaturdifferenz zwischen Primärnetz und Verbrauchernetz für die Belange der Gasturbogruppe oder allgemein der Schaltung rekuperiert werden. Die vorliegende Gasturbogruppe, die auch als autonome Einheit wirken kann, besteht aus einem Verdichter 1, einer dem Verdichter nachgeschalteten ersten Brennkammer 2, einer dieser Brennkammer 2 nachgeschalteten ersten Turbine 3, einer dieser Turbine 3 nachgeschalteten zweiten Brennkammer 4 und einer dieser Brennkammer 4 nachgeschalteten zweiten Turbine 5. Der Verdichter 1 resp. die Verdichtereinheit kann mit einer Zwischenkühlung in Wirkverbindung stehen. Die genannten Strömungsmaschinen 1, 3, 5 weisen eine einheitliche Welle 26 auf. Diese Welle ist vorzugsweise auf zwei in der Figur nicht näher ersichtlichen Lagern gelagert, welche vorzugsweise kopfseitig des Verdichters 1 und stromab der zweiten Turbine 5 plaziert sind. Die angesaugte Luft 6 wird im Verdichter 1 komprimiert und strömt dann als verdichtete Luft 7 in ein nicht näher gezeigtes Gehäuse. In diesem Gehäuse ist auch die erste Brennkammer 2 untergebracht, welche vorzugsweise als zusammenhängende Ringbrennkammer ausgebildet ist. Selbsverständlich kann die verdichtete Luft 7 zur ersten Brennkammer 2 aus einer nicht gezeigten Luftspeicheranlage beigestellt werden. Die Ringbrennkammer 2 weist kopfseitig, auf den Umfang verteilt, eine Anzahl von nicht näher gezeigten Brennern auf, welche vorzugsweise als Vormischbrenner ausgelegt sind. An sich können hier auch Diffusionsbrenner zum Einsatz gelangen. Im Sinne einer Reduzierung der Schad-stoff-Emissionen aus dieser Verbrennung, insbesondere was die NOx-Emissionen betrifft, ist es indessen vorteilhaft, eine Anordnung von Vormischbrennem gemäss EP-PS-0 321 809 sowie die dort beschriebene Art der Zuführung der verschiedenen Brennstoffe vorzusehen. Was die Anordnung der Vormischbrenner in Umfangsrichtung der Ringbrennkammer 2 anbelangt, so kann eine solche bei Bedarf von der üblichen Konfiguration gleicher Brenner abweichen, und stattdessen können unterschiedlich grosse Vormischbrenner zum Einsatz kommen. Dies geschieht vorzugsweise so, dass jeweils zwischen zwei grossen Vormischbrennern ein kleiner Vormischbrenner gleicher Konfiguration disponiert ist Die grossen Vormischbrenner, welche die Funktion von Hauptbrennern zu erfüllen haben, stehen zu den kleinen Vormischbrennem, welche die Pilotbrenner dieser Brennkammer sind, bezüglich der sie durchströmenden Brennerluft, also der verdichteten Luft 7 aus dem Verdichter 1, in einem Grössenverhältnis zueinander, das faltweise festgelegt wird. Im gesamten Lastbereich der Brennkammer arbeiten die Pilotbrenner als selbstgängige Vormischbrenner, wobei die Luftzahl fast konstant bleibt. Die Zu- oder Abschaltung der Hauptbrenner erfolgt nach bestimmten anlagespezifischen Vorgaben. Weil die Pilotbrenner im ganzen Lastbereich bei idealem Gemisch gefahren werden können, sind die NOx-Emissionen auch bei Teillast sehr gering. Bei einer solchen Konstellation kommen die umlaufenden Stromlinien im Frontbereich der Ringbrennkammer sehr nahe an die Wirbeizentren der Pilotbrenner heran, so dass eine Zündung an sich nur mit diesen Pilotbrennern möglich ist Beim Hochfahren wird die Brennstoffmenge, die über die Pilotbrenner zugeführt wird, soweit gesteigert, bis diese ausgesteuert sind, d.h. bis die volle Brennstoffmenge zur Verfügung steht. Die Konfiguration wird so gewählt, dass dieser Punkt der jeweiligen Lastabwurfbedingungen der Gasturbogruppe entspricht. Die weitere Leistungssteigerung erfolgt dann über die Hauptbrenner. Bei der Spitzenlast der Gasturbogruppe sind sonach auch die Hauptbrenner voll ausgesteuert. Weil die durch die Pilotbrenner initierte Konfiguration "kleiner" heisser Wirbelzentren zwischen den von den Hauptbrennern stammenden "grossen" kühleren Wirbelzentren extrem instabil ausfällt, wird auch bei mager betriebenen Hauptbrennem im Teillastbereich ein sehr guter Ausbrand mit zusätzlich zu den NOx-Emissionen niedrigen CO- und UHC-Emissionen erreicht, d.h. die heissen Wirbel der Pilotbrenner dringen sofort in die kleinen Wirbel der Hauptbrenner ein. Selbstverständlich kann die Ringbrennkammer aus einer Anzahl einzelner rohrförmiger Brennräume bestehen, welche ebenfalls schrägringförmig, bisweilen auch schraubenförmig, um die Rotorachse angeordnet sind. Diese Ringbrennkammer 2, unabhängig von ihrer Auslegung, wird und kann geometrisch so angeordnet werden, dass sie auf die Rotorlänge praktisch keinen Einfluss ausübt. Die Heissgasen 8 aus dieser ersten Brennkammer 2 beaufschlagen die unmittelbar nachgeschaltete erste Turbine 3, deren kalorisch entspannende Wirkung auf die Heissgase bewusst minimal gehalten wird, d.h. diese Turbine 3 wird demnach aus nicht mehr als zwei Laufschäufelreihen bestehen. Bei einer solchen Turbine 3 wird es nötig sein, einen Druckausgleich an den Stirnflächen zwecks Stabilisierung des Axialschubes vorzusehen. Die in der Turbine 3 teilentspannten Heissgase 9, welche unmittelbar in die zweite Brennkammer 4 strömen, weisen aus dargelegten Gründen eine recht hohe Temperatur auf, vorzugsweise ist sie betriebsspezifisch so auszulegen, dass sie sicher noch um 1000°C beträgt. Diese zweite Brennkammer 4 hat im wesentlichen die Form eines zusammenhängenden ringförmigen axialen oder quasi-axialen Ringzylinders. Diese Brennkammer 4 kann selbstverständlich auch aus einer Anzahl axial, quasi-axial oder schraubenförmig angeordneten und in sich abgeschlossenen Brennräumen bestehen. Was die Konfiguration der ringförmigen, aus einem einzigen Brennraum bestehenden Brennkammer 4 betrifft, so sind in Umfangsrichtung und radial dieses ringförmigen Zylinders mehrere in der Figur nicht näher gezeigte Brennstofflanzen disponiert. Diese Brennkammer 4 weist keinen Brenner auf. Die Verbrennung eines in die aus der Turbine 3 kommenden teilentspannten Heissgase 9 eingedüsten Brennstoffes 13 geschieht hier durch Selbstzündung, soweit freilich das Temperatumiveau eine solche Betriebsart zulässt. Ausgehend davon, dass die Brennkammer 4 mit einem gasförmigen Brennstoff, also beispielsweise Erdgas, betrieben wird, muss die Austrittstemperatur der teilentspannten Heissgase 9 aus der Turbine 3 noch sehr hoch sein, wie oben dargelegt um die 1000°C, und dies selbstverständlich auch bei Teillastbetrieb, was auf die Auslegung dieser Turbine 2 eine ursächliche Rolle spielt. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt Zu diesem Zweck werden in dieser Brennkammer 4, vorzugsweise an der Innen- und Aussenwand in Umfangsrichtung disponiert, eine Reihe von nicht näher gezeigten Elementen vorgesehen, welche in axialer Richtung vorzugsweise stromauf der Brennstofflanzen plaziert sind. Die Aufgabe dieser Elemente besteht darin, Wirbel zu erzeugen, welche eine Rückströmzone, analog derjenige in den bereits erwähnten Vormischbrennern, induzieren. Da es sich bei dieser Brennkammer 4, aufgrund der axialen Anordnung und der Baulänge, um eine Hochgeschwindigkeitsbrennkammer handelt, bei welcher die mittlere Geschwindigkeit der Arbeitsgase grösser ca. 60 m/s ist, müssen die wirbelerzeugenden Elemente strömungskonform ausgebildet werden. Anströmungsseitig sollen diese vorzugsweise aus einer tetraederförmigen Form mit anströmungsschiefen Flächen bestehen. Die wirbelerzeugenden Elemente können entweder an der Aussenfläche und/oder an der Innenfläche plaziert sein. Selbstverständlich können die wirbelerzeugenden Elemente auch axial zueinander verschoben sein. Die abströmungsseitige Fläche der wirbelerzeugenden Elemente ist im wesentlichen radial ausgebildet, so dass sich ab dort eine Rückströmzone einstellt. Die Selbstzündung in der Brennkammer 4 muss indessen auch in den transienten Lastbereichen sowie im Teillastbereich der Gasturbogruppe gesichert bleiben, d.h., es müssen Hilfsvorkehrungen vorgesehen werden, welche die Selbstzündung in der Brennkammer 4 auch dann sicherstellen, wenn sich eine Flexion der Temperatur der Gase im Bereich der Eindüsung des Brennstoffes einstellen sollte. Um eine sichere Selbstzündung des in die Brennkammer 4 eingedüsten gasförmigen Brennstoffes zu gewährleisten, wird diesem eine kleine Menge eines anderen Brennstoffes mit einer niedrigeren Zündtemperatur beigegeben. Als Hilfsbrennstoff eignet sich hier beispielsweise Brennöl sehr gut. Der flüssige Hilfsbrennstoff, entsprechend eingedüst, erfüllt die Aufgabe, sozusagen als Zündschnur zu wirken, und ermöglicht auch dann eine Selbstzündung in der Brennkammer 4, wenn die teilentspannten Heissgase 9 aus der ersten Turbine 3 eine Temperatur unterhalb des angestrebten optimalen Niveaus von 1000°C aufweisen sollten. Diese Vorkehrung, Brennöl zur Sicherstellung einer Selbstzündung vorzusehen, erweist sich freilich immer dann als besonders angebracht, wenn die Gasturbogruppe mit stark reduzierter Last betrieben wird. Diese Vorkehrung trägt des weiteren entscheidend dazu bei, dass die Brennkammer 4 eine minimale axiale Länge aufweisen kann. Die kurze Baulänge der Brennkammer 4, die Wirkung der wirbelerzeugenden Elemente zur Flammenstabilisierung sowie die fortwährende Sicherstellung der Selbstzündung sind demnach dafür verantwortlich, dass die Verbrennung sehr rasch erfolgt, und die Verweilzeit des Brennstoffes im Bereich der heissen Flammenfront minimal bleibt. Eine unmittelbar verbrennungsspezifisch messbare Wirkung hieraus betrifft die NOx-Emissionen, welche eine Minimierung erfahren, dergestalt, dass sie nunmehr kein Thema mehr bilden. Diese Ausgangslage ermöglicht ferner, den Ort der Verbrennung klar zu definieren, was sich in einer optimierten Kühlung der Strukturen dieser Brennkammer 4 niederschlägt. Die in der Brennkammer 4 aufbereiteten Heissgase 10 beaufschlagen anschliessend eine nachgeschaltete zweite Turbine 5. Die thermodynamischen Kennwerte der Gasturbogruppe können so ausgelegt werden, dass die Abgase 11 aus der zweiten Turbine 5 noch soviel kalorisches Potential aufweisen, um damit eine hier anhand eines Abhitzedampferzeugers 14 dargestellte Dampferzeugungsstufe und Dampfkreistauf zu betreiben. Wie bereits bei der Beschreibung der Ringbrennkammer 2 hingewiesen wurde, ist diese geometrisch so angeordnet, dass sie auf die Rotorlänge der Gasturbogruppe praktisch keinen Einfluss ausübt. Des weiteren ist feststellbar, dass die zweite zwischen Abströmungsebene der ersten Turbine 3 und Anströmungsebene der zweiten Turbine 5 verlaufende Brennkammer 4 eine minimale Länge aufweist. Da ferner die Entspannung der Heissgase in der ersten Turbine 3, aus dargelegten Gründen, über wenige, vorzugsweise über nur 1 bis 2 Laufschaufelreihen erfolgt, lässt sich eine Gasturbogruppe bereitstellen, deren Rotorwelle 26 aufgrund ihrer minimierten Länge technisch einwandfrei auf zwei Lagern abstützbar ist. Die Leistungsabgabe der Strömungsmaschinen geschieht über einen verdichterseitig angekoppelten Generator 27, der auch als Anwurfmotor dienen kann. Nach Entspannung in der Turbine 5 durchströmen die noch mit einem hohen kalorischen Potential versehenen Abgase 11 den bereits erwähnten Abhitzedampferzeuger 14, in welchem in Wärmetauschverfahren verschiedentlich Dampf erzeugt wird, der dann das Medium für die Betriebsweise dieser Kraftwerksanlage bildet. Die kalorisch genutzten Abgase 11 strömen anschliessend als Rauchgase 25 ins Freie.

Der Abhitzedampferzeuger 14 besteht aus einem Economizer 14c, einem verdampfer 14b und einem Ueberhitzer 14a. Ueber eine Pumpe 15 wird Förderwasser 16 in den Economizer 14c eingeleiet, in welchem im Wärmetauschverfahren mit den dort durchströmenden Abgase eine erste Erwärmung des Förderwassers stattfindet, wobei das hier gebildete Heisswasser 17 in eine Trommel 28 geleitet wird. Dieses Heisswasser 17 wird dann über eine Leitung 18 aus der Trommel 28 entnommen und zur weiteren thermischen Aufbereitung durch den Mitteldruckteil 14b im Abhitzedampferzeuger 14 geleitet Hieraus entsteht ein Sattdampf 19, der in die Trommel 28 rückgeführt wird. Eine Teil 22 davon wird als Kühldampfmenge in die zu kühlenden Komponenten der Gasturbogruppe geleitet, die andere Dampfmenge 20 erfährt im Hochdruckteil 14a eine weitere Aufheizung zu überhitztem Dampf 21, der direkt in die Hochdruck-Brennkammer 2 geleitet wird. Diese Zuleitung kann auch mittelbar über eine nicht näher gezeigte Dampfturbine, vorzugsweise eine Gegendruckdampfturbine erfolgen. Die zu Kühlzwecken entnommene Dampfmenge 22 aus der Trommel 28 wird über einzelne geschlossene Strömungspfade 22a/23a, 22b/23b, 22c/23c, 22d,/23d durch die zu kühlenden Komponenten 2, 3, 4, 5 geleitet, wobei dieser Dampf dann ebenfalls in die Hochdruck-Brennkammer 2 eingegeben wird. Die Entnahme des Sattdampfes 22 aus der Trommel 28 lässt sich auch aus einer anderen Stelle des Dampfkreislaufes bewerkstelligen, wo ein genügend hoher Druck vorherrscht. Eine solche Vorkehrung lässt sich beispielsweise immer dort anwenden, wo der Abhitzedampferzeuger aus einem Eindruckkessel besteht. Bei richtiger Handhabung lässt sich diese Schaltung, unter Einbeziehung eines in die Leitung 21 integrierten Drosselorgans 24, so auslegen, dass die beiden in die Hochdruck-Brennkammer 2 eingeleiteten Dämpfmengen 21, 23 annähernd dieselbe Qualität aufweisen, womit sich dadurch eine Maximierung des Wirkungsgrades und der spezifischen Leistung der Anlage erreichen lässt.

### Bezugszeichenliste

- 1: Verdichter
- 2: Erste Brennkammer, Hochdruck-Brennkammer
- 3: Erste Turbine
- 4: Zweite Brennkammer
- 5: Zweite Turbine
- 6: Ansaugluft
- 7: Verdichtete Luft
- 8: Heissgase
- 9: Teilentspannte Heissgase
- 10: Heissgase
- 11: Abgase
- 12: Brennstoff
- 13: Brennstoff
- 14: Abhitzedampferzeuger
- 14a: Ueberhitzer
- 14b: Verdampfer
- 14c: Economizer
- 15: Förderpumpe
- 16: Förderwasser
- 17: Heisswasser
- 18: Heisswasser zum Verdampfer
- 19: Sattdampf
- 20: Sattdampf zum Ueberhitzer
- 21: Ueberhitzter Dampf
- 22: Sattdampf
- 22a: Kühldampfteilmenge für zweite Turbine
- 22b: Kühldampfteilmenge für zweite Brennkammer
- 22c: Kühldampfteilmenge für erste Turbine
- 22d: Kühldampfteilmenge für erste Brennkammer
- 23: Ueberhitzter Dampf
- 23a: Rücklauf Dampfteilmenge aus zweiter Turbine
- 23b: Rücklauf Dampfteilmenge aus zweiter Brennkammer
- 23c: Rücklauf Dampfteilmenge aus erster Turbine
- 23d: Rücklauf Dampfteilmenge aus erster Brennkammer
- 24: Drosselorgan
- 25: Rauchgase
- 26: Welle
- 27: Generator
- 28: Trommel

## Patentansprüche

1. Verfahren zum Betrieb einer Kraftwerksanlage, im wesentlichen bestehend aus einer mit sequentieller Verbrennung betriebenen Gasturbogruppe (1,2,3,4,5) und einem der Gasturbogruppe (1,2,3,4,5) nachgeschalteten Abhitzedampferzeuger (14), in welchem mindestens eine Komponente an überhitztem Dampf und eine Komponente an Sattdampf erzeugt werden, und zumindest ein Teil des überhitzten Dampfes an geeigneter Stelle in die Gasturbogruppe eingeleitet wird und dass die zweite mittelbar oder unmittelbar aus dem Abhitzedampferzeuger (14) stammende Menge des Sattdampfes (22) über geschlossene Strömungspfade (22a/23a, 22b/23b, 22c/23c, 22d/23d) durch die einzelnen zu kühlenden Komponenten (2, 3, 4, 5) der Gasturbogruppe geleitet und überhitzt wird, und dass diese Dampfmenge (23) anschliessend in die Hochdruck-Brennkammer (2) einströmt, **dadurch gekennzeichnet, dass** die erste unmittelbar aus dem Abhitzedampferzeuger (14) stammende Menge des überhitzten Dampfes (21) über ein Drosselorgan (24) in eine zur Gasturbogruppe (1,2,3,4,5) gehörende Hochdruck-Brennkammer (2) geleitet wird.

## Claims

1. Method of operating a power station plant, essentially comprising a gas-turbine group (1, 2, 3, 4, 5) operated with sequential combustion and a waste-heat steam generator (14) which is connected downstream of the gas-turbine group (1, 2, 3, 4, 5) and in which at least one component of superheated steam and one component of saturated steam are generated, and at least some of the superheated steam is introduced at a suitable point into the gas-turbine group, and in that the second quantity of saturated steam (22) originating indirectly or directly from the waste-heat steam generator (14) is passed via closed flow paths (22a/23a, 22b/23b, 22c/23c, 22d/23d) through the individual components (2, 3, 4, 5) of the gas-turbine group which are to be cooled and is superheated, and in that this steam quantity (23) then flows into the high-pressure combustion chamber (2), **characterized in that** the first quantity of superheated steam (21) originating directly from the waste-heat steam generator (14) is passed via a constricting element (24) into a high-pressure combustion chamber (2) belonging to the gas-turbine group (1, 2, 3, 4, 5).

## Revendications

1. Procédé pour l'exploitation d'une installation de centrale électrique, constituée essentiellement d'un turbogroupe à gaz (1,2,3,4,5) fonctionnant avec combustion séquentielle et d'une chaudière de récupération (14), raccordé en aval du turbogroupe à gaz (1,2,3,4,5), dans lequel au moins une composante à vapeur surchauffée et une composante à vapeur saturée sont générées, et au moins une partie de la vapeur surchauffée est introduite à un endroit approprié dans le turbogroupe à gaz et dans lequel le deuxième débit de la vapeur saturée (22) provenant directement ou indirectement de la chaudière de récupération (14) est amené via des chemins d'écoulement (22a/23a, 22b/23b, 22c/23c, 22d/23d) fermés à travers les différents composants (2,3,4,5) à refroidir du turbogroupe à gaz et est surchauffé et ce débit de vapeur (23) s'écoule ensuite dans la chambre de combustion haute-pression (2), **caractérisé en ce que** le premier débit de la vapeur surchauffée (21) provenant directement de la chaudière de récupération (14) est introduit dans une chambre de combustion haute-pression (2) faisant partie du turbogroupe à gaz (1,2,3,4,5) via un organe d'étranglement(24).
